# EUROPÄISCHE PATENTANMELDUNG

(11) **EP 2 445 076 A1**
(43) Veröffentlichungstag der Anmeldung: **25.04.2012**
(21) Anmeldenummer: 10187992.2
(22) Anmeldetag: 19.10.2010
(51) Int. Cl.: H02J 3/18

(54) **Stromversorgungseinrichtung für eine nichtlineare, zeitlich variierende Last**

(71) Anmelder: Siemens Aktiengesellschaft, 80333 München (DE)
(72) Erfinder: Wong, Kwok Tung, 90617 Puschendorf (DE)

(57) **Zusammenfassung**

Eine Stromversorgungseinrichtung für eine nichtlineare, zeitlich variierende Last (1) weist ein Stromsystem (2) mit mehreren Phasen (3) auf. An die Phasen (3) des Stromsystems (2) sind die nichtlineare, zeitlich variierende Last (1) und ein Blindleistungskompensator (5) angeschaltet. Der Blindleistungskompensator (5) ist als Multilevelkonverter mit mehreren Strängen (6) ausgebildet. Die Stränge (6) des Multilevelkonverters (5) sind einerseits mit je einer der Phasen (3) des Stromsystems (2) und andererseits an einem gemeinsamen Sternpunkt (7) miteinander verbunden. Der gemeinsame Sternpunkt (7) des Multilevelkonverters (5) ist mit einem Sternpunkt (12, 15) einer weiteren an die Phasen (3) des Stromsystems (2) angeschalteten Einrichtung (8, 14) verbunden, so dass der gemeinsame Sternpunkt (7) des Multilevelkonverters (5) sowohl über die Stränge (6) des Multilevelkonverters (5) als auch über die weitere Einrichtung (8, 14) mit den Phasen (3) des Stromsystems (2) verbunden ist. Die Verbindung über die weitere Einrichtung (8, 14) ist derart ausgebildet, dass in Bezug auf das Stromnullsystem des Stromsystems (2) eine niederohmige und in Bezug auf das Strommitsystem des Stromsystems (2) und das Stromgegensystem des Stromsystems (2) eine hochohmige Verbindung des gemeinsamen Sternpunkts (7) des Multilevelkonverters (5) mit den Phasen (3) des Stromsystems (2) besteht.

## Beschreibung

Die vorliegende Erfindung betrifft eine Stromversorgungseinrichtung für eine nichtlineare, zeitlich variierende Last,
- wobei die Stromversorgungseinrichtung ein Stromsystem mit mehreren Phasen aufweist,
- wobei an die Phasen des Stromsystems die nichtlineare, zeitlich variierende Last und ein Blindleistungskompensator angeschaltet sind,
- wobei der Blindleistungskompensator als Multilevelkonverter mit mehreren Strängen ausgebildet ist,
- wobei die Stränge des Multilevelkonverters einerseits mit je einer der Phasen des Stromsystems und andererseits an einem gemeinsamen Sternpunkt miteinander verbunden sind.

Nichtlineare, zeitlich variierende Lasten wie beispielsweise Drehstrom-Lichtbogenöfen können deutliche Netzrückwirkungen zur Folge haben, insbesondere sogenannten Flicker. Aus diesem Grund weisen Stromversorgungsanlagen für nichtlineare, zeitlich variierenden Lasten in der Regel einen Blindleistungskompensator auf. Der Blindleistungskompensator ist der nichtlinearen, zeitlich variierenden Last parallel geschaltet. Im einfachsten Fall kann der Blindleistungskompensator als sogenannter TCR (thyristor controlled reactor) ausgebildet sein, siehe beispielsweise die EP 0 847 612 B1.

Eine Stromversorgungseinrichtung der eingangs genannten Art ist beispielsweise aus der DE 10 2008 049 610 A1 und der EP 2 202 863 A1 bekannt.

Im Stand der Technik ist zwar ausdrücklich erwähnt, dass der Multilevelkonverter alternativ in Stern- oder in Dreieckschaltung an die Phasen des Stromsystems angeschaltet sein kann. In der Praxis ist der Multilevelkonverter jedoch stets in Dreieckschaltung an die Phasen des Stromsystems angeschaltet. Der Grund hierfür besteht darin, dass der Multilevelkonverter zu einem bestimmten Zeitpunkt über einen seiner Stränge Energie absorbieren und zugleich über einen anderen seiner Stränge Energie abgeben können muss. Dies kann - sowohl bei einer Dreieckschaltung als auch bei einer Sternschaltung - sehr schnell zu einem Überschreiten zulässiger Spannungsgrenzen führen, die ein Blockieren des Multilevelkonverters zur Folge haben.

Bei einer Anschaltung des Multilevelkonverters in Dreieckschaltung ist jedoch bekannt, die Spannungsgrenzen dadurch einzuhalten, dass innerhalb des von den Strängen des Multilevelkonverters gebildeten Kreises ein entsprechender Stromfluss generiert wird, der sich aufbauende Spannungen im zulässigen Rahmen hält. Ein derartiger Nullstromfluss ist bei einer Sternschaltung nicht ohne Weiteres möglich.

Es ist weiterhin bekannt, innerhalb des Multilevelkonverters einen hochfrequent betriebenen Wechselspannungskreis vorzusehen, welcher die einzelnen Gleichspannungskreise aller Module aller Stränge des Multilevelkonverters miteinander verbindet. Der Energieaustausch erfolgt bei dieser Ausgestaltung über eine Gleichspannungs-Wechselspannungs-Wandlung nebst nachgeschalteter Wechselspannungs-Gleichspannungs-Wandlung. Diese Ausgestaltung des Multilevelkonverters ist sowohl in Dreieckals auch in Sternschaltung verwendbar. Die Ausgestaltung des Multilevelkonverters ist in diesem Fall jedoch sehr komplex. Weiterhin ist der mögliche Energietransfer pro Zeiteinheit relativ gering.

Die Aufgabe der vorliegenden Erfindung besteht darin, eine Stromversorgungseinrichtung der eingangs genannten Art derart auszugestalten, dass der Multilevelkonverter auf einfache Weise betriebssicher betreibbar ist.

Die Aufgabe wird durch eine Stromversorgungseinrichtung mit den Merkmalen des Anspruchs 1 gelöst. Vorteilhafte Ausgestaltungen der erfindungsgemäßen Stromversorgungseinrichtung sind Gegenstand der abhängigen Ansprüche 2 bis 11.

Erfindungsgemäß ist vorgesehen, eine Stromversorgungseinrichtung der eingangs genannten Art dadurch auszugestalten,
- dass der gemeinsame Sternpunkt des Multilevelkonverters mit einem Sternpunkt einer weiteren an die Phasen des Stromsystems angeschalteten Einrichtung verbunden ist, so dass der gemeinsame Sternpunkt des Multilevelkonverters sowohl über die Stränge des Multilevelkonverters als auch über die weitere Einrichtung mit den Phasen des Stromsystems verbunden ist, und
- dass die Verbindung über die weitere Einrichtung derart ausgebildet ist, dass in Bezug auf das Stromnullsystem des Stromsystems eine niederohmige und in Bezug auf das Strommitsystem des Stromsystems und das Stromgegensystem des Stromsystems eine hochohmige Verbindung des gemeinsamen Sternpunkts des Multilevelkonverters mit den Phasen des Stromsystems besteht.

In einer ersten möglichen Ausgestaltung der erfindungsgemäßen Stromversorgungseinrichtung ist vorgesehen, dass die weitere Einrichtung als Zickzackwicklung ausgebildet ist.

In der Regel weist die Stromversorgungseinrichtung einen Netztransformator auf, über den die Phasen des Stromsystems mit elektrischer Energie versorgbar sind. In diesem Fall kann die Zickzackwicklung alternativ als Sekundärwicklung in den Netztransformator eingebaut sein oder als vom Netztransformator verschiedener Zickzacktransformator ausgebildet sein. Die erstgenannte Ausgestaltung ist insbesondere dann von Vorteil, wenn die Stromversorgungseinrichtung neu erstellt wird. Die letztgenannte Ausgestaltung ist auch dann realisierbar, wenn eine bestehende Stromversorgungseinrichtung zu einer erfindungsgemäßen Stromversorgungseinrichtung umgestaltet werden soll.

Wenn die Zickzackwicklung als vom Netztransformator verschiedener Zickzacktransformator ausgebildet ist, ist vorzugsweise mindestens einer der Sternpunkte des Netztransformators und des Zickzacktransformators nicht geerdet.

In der Regel weist die Stromversorgungseinrichtung einen Filterkreis auf, über den Oberschwingungen von Last- und Konverterströmen filterbar sind. Der Filterkreis weist in diesem Fall mehrere Stränge auf, die einerseits mit je einer der Phasen des Stromsystems und andererseits an einem gemeinsamen Sternpunkt des Filterkreises miteinander verbunden sind. Es ist möglich, dass die weitere Einrichtung mit dem Filterkreis identisch ist. In diesem Fall wird keine Zickzackwicklung benötigt.

Im Falle der Verwendung des Filterkreises als weitere Einrichtung ist vorzugsweise zwischen dem gemeinsamen Sternpunkt des Filterkreises und dem gemeinsamen Sternpunkt des Multilevelkonverters eine Drossel angeordnet. Die Drossel kann insbesondere derart dimensioniert sein, dass die kombinierte Impedanz von Drossel und Filterkreis Null ist.

In der Regel weist die Stromversorgungseinrichtung zusätzlich zu dem oben genannten Filterkreis mindestens einen weiteren Filterkreis auf, über den ebenfalls Oberschwingungen der Last- und Konverterströme filterbar sind.

Die Anzahl an Phasen des Stromsystems kann nach Bedarf bestimmt sein. In der Regel sind drei Phasen vorhanden.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: den prinzipiellen Aufbau einer Stromversorgungseinrichtung für eine nichtlineare, zeitlich variierende Last und
- FIG 2 bis 4: je eine mögliche erfindungsgemäße Ausgestaltung der Stromversorgungseinrichtung von FIG 1.

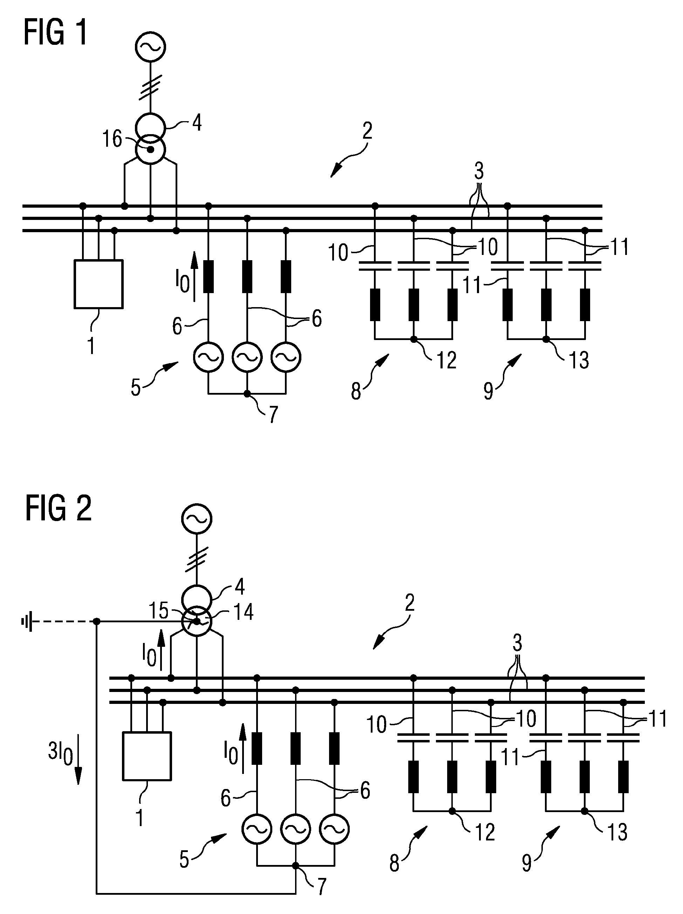

Gemäß FIG 1 ist eine nichtlineare, zeitlich variierende Last 1 - rein beispielhaft - als elektrischer Lichtbogenofen ausgebildet. Der Lichtbogenofen 1 wird über ein Stromsystem 2 mit elektrischer Energie versorgt. Das Stromsystem 2 weist mehrere Phasen 3 auf. Der Lichtbogenofen 1 ist an die Phasen 3 des Stromsystems 2 angeschaltet. Die Anzahl an Phasen 3 kann nach Bedarf bestimmt sein. In der Regel und entsprechend der Darstellung von FIG 1 sind drei Phasen 3 vorhanden.

Die am Lichtbogenofen 1 anliegende Spannung ist in der Regel relativ niedrig. Sie liegt typischerweise im Bereich zwischen mehreren hundert Volt und zwei Kilovolt. Die Spannung des Stromsystems 2 hingegen liegt in der Regel erheblich höher. Meist liegt sie im zweistelligen Kilovoltbereich oder knapp darüber. Typische Spannungen des Stromsystems 2 sind 11 Kilovolt, 30 Kilovolt und 110 Kilovolt. Zwischen dem Lichtbogenofen 1 und den Phasen 3 des Stromsystems 2 ist daher ein Ofentransformator angeordnet. Im Rahmen der vorliegenden Erfindung ist der Ofentransformator jedoch nur von untergeordneter Bedeutung und daher in FIG 1 nicht dargestellt.

Bei dem Stromsystem 2 kann es sich um ein externes, größeres Stromsystem handeln. Alternativ kann es sich um ein internes Stromsystem des Betreibers des Lichtbogenofens 1 handeln. Im Falle eines internen Stromsystems kann es sich um ein eigenständiges Stromsystem handeln. Alternativ kann die Stromversorgungseinrichtung einen Netztransformator 4 aufweisen, über den die Phasen 3 des Stromsystems 2 aus einem externen Netz mit elektrischer Energie versorgbar sind. Das externe Netz kann eine relativ hohe Spannung von beispielsweise 110 Kilovolt oder 380 Kilovolt aufweisen.

An die Phasen 3 des Stromsystems 2 ist weiterhin ein Blindleistungskompensator 5 angeschaltet. Der Blindleistungskompensator 5 ist als Multilevelkonverter mit mehreren Strängen 6 ausgebildet. Gemäß FIG 1 sind die Stränge 6 des Multilevelkonverters 5 einerseits mit je einer der Phasen 3 des Stromsystems 2 und andererseits an einem gemeinsamen Sternpunkt 7 miteinander verbunden.

Multilevelkonverter 5 sind als solche allgemein bekannt. Bei ihnen besteht jeder Strang 6 aus einer mehrstufigen Reihenschaltung von Modulen, wobei jedes Modul einen Speicherkondensator und selbstgeführte Halbleiterschalter umfasst. Der Begriff "selbstgeführt" bedeutet, dass die Halbleiterschalter durch den Halbleiterschalter von außen zugeführte Steuersignale sowohl zuschaltbar als auch abschaltbar sind. Beispielsweise können die selbstgeführten Halbleiterschalter als IGBTs oder als GTO-Thyristoren ausgebildet sein. Der Begriff "selbstgeführt" steht somit im Gegensatz zum Begriff "netzgeführt". Dieser Begriff bedeutet, dass das jeweilige Schaltelement zwar gezielt zugeschaltet werden kann, jedoch nicht durch ein externes Steuersignal abgeschaltet werden kann. Ein Beispiel eines netzgeführten Halbleiterschaltelements ist ein "normaler" Thyristor.

Die Halbleiterschalter jedes Moduls sind unabhängig von den Halbleiterschaltern der anderen Module desselben Strangs 6 und der anderen Stränge 6 schaltbar. In Abhängigkeit von dem jeweiligen Schaltzustand der Halbleiterschalter des entsprechenden Moduls ist der jeweilige Speicherkondensator des jeweiligen Moduls alternativ überbrückt oder aktiv. Details zu Aufbau, Wirkungsweise und Betrieb des Multilevelkonverters 5 sind beispielsweise der US 6 075 350 A und der EP 2 202 863 A1 zu entnehmen.

Die Stromversorgungseinrichtung weist in der Regel weiterhin mindestens einen Filterkreis 8, 9 auf. Dargestellt sind in FIG 1 zwei derartige Filterkreise 8, 9. Über jeden Filterkreis 8, 9 sind Oberschwingungen von Last- und Konverterströmen filterbar. Die Oberschwingungen sind durch den Betrieb des Lichtbogenofens 1 hervorgerufen.

Jeder Filterkreis 8, 9 ist auf eine bestimmte Filterfrequenz ausgelegt. Jeder Filterkreis 8, 9 weist mehrere Stränge 10, 11 auf. Jeder Strang 10, 11 des jeweiligen Filterkreises 8, 9 ist einerseits mit je einer der Phasen 3 des Stromsystems 2 verbunden. Weiterhin sind die Stränge 10, 11 des jeweiligen Filterkreises 8, 9 an einem jeweiligen gemeinsamen Sternpunkt 12, 13 des jeweiligen Filterkreises 8, 9 miteinander verbunden.

Bei den Filterkreisen 8, 9 fällt eine jeweilige zu kompensierende Filterleistung an. Die Filterleistungen der Filterkreise 8, 9 sind in der Regel verschieden voneinander. Die Filterkreise 8, 9 sind auf die jeweils zu kompensierende Filterleistung ausgelegt.

Die einzelnen Stränge 6 des Multilevelkonverters 5 müssen Ströme aufnehmen und abgeben können. Die in den einzelnen Strängen 6 des Multilevelkonverters 5 fließenden Ströme sind in der Regel verschieden voneinander. Im Gegensatz zu einer Dreieckschaltung der Stränge 6, bei der die Stränge 6 des Multilevelkonverters 5 mit je zwei der Phasen 3 des Stromsystems 2 verbunden sind, ist ein Kreisstrom innerhalb des Multilevelkonverters 5 nicht möglich bzw. zumindest nicht ohne Weiteres möglich. In Verbindung mit den FIG 2 bis 4 werden nachfolgend erfindungsgemäße Ausgestaltung der Stromversorgungseinrichtung von FIG 1 erläutert, bei denen der Nullstrom - in den FIG 2 bis 4 mit I₀ bezeichnet - anderweitig realisierbar ist.

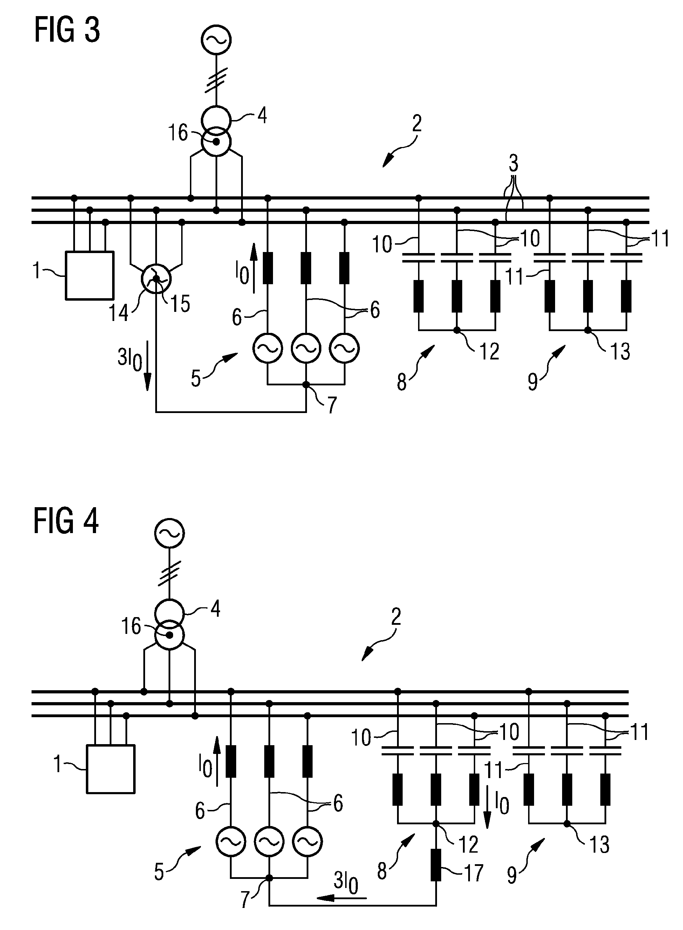

Gemäß den FIG 2 und 3 ist eine Zickzackwicklung 14 vorhanden. Die Zickzackwicklung 14 ist an die Phasen 3 des Stromsystems 2 angeschaltet. Bei der Ausgestaltung gemäß FIG 2 ist die Zickzackwicklung 14 als Sekundärwicklung in den Netztransformator 4 eingebaut. Sie übernimmt also die "normale" Funktion der Sekundärwicklung, die Phasen 3 des Stromsystems 2 aus dem externen Netz zu speisen. Bei der Ausgestaltung gemäß FIG 3 ist die Zickzackwicklung 14 als vom Netztransformator 4 verschiedener Zickzacktransformator ausgebildet.

Der gemeinsame Sternpunkt 7 des Multilevelkonverters 5 ist bei den Ausgestaltungen der FIG 2 und 3 mit einem Sternpunkt 15 der Zickzackwicklung 14 verbunden. Dadurch ist der gemeinsame Sternpunkt 7 des Multilevelkonverters 5 sowohl über die Stränge 6 des Multilevelkonverters 5 als auch über die Zickzackwicklung 14 mit den Phasen 3 des Stromsystems 2 verbunden. Die Verbindung über die Zickzackwicklung 14 ist (aufgrund der bauarttypischen Eigenschaften von Zickzackwicklungen) derart, dass - bezogen auf die Verbindung über die Zickzackwicklung 14 - in Bezug auf das Stromnullsystem des Stromsystems 2 eine niederohmige Verbindung des gemeinsamen Sternpunkts 7 des Multilevelkonverters 5 mit den Phasen 3 des Stromsystems 2 besteht. In Bezug auf das Strommitsystem des Stromsystems 2 und das Stromgegensystem des Stromsystems 2 besteht - bezogen auf die Verbindung über die Zickzackwicklung 14 - jedoch nur eine hochohmige Verbindung des gemeinsamen Sternpunkts 7 des Multilevelkonverters 5 mit den Phasen 3 des Stromsystems 2.

Die Begriffe "Stromnullsystem", "Strommitsystem" und "Stromgegensystem" sind in Verbindung mit Drehstromsystemen jedem Fachmann geläufig und vertraut. Sie haben bei einem dreiphasigen Stromsystem folgende Bedeutung:
Das Strommitsystem weist drei Vektoren gleicher Amplitude auf, nachfolgend als A, B und C bezeichnet. Die drei Vektoren A, B, C weisen einen Phasenversatz von 120° elektrisch relativ zueinander auf. Die Vektoren A, B, C rotieren gleichsinnig zu den Spannungen der Phasen 3.

Das Stromgegensystem weist ebenfalls drei Vektoren gleicher Amplitude auf, nachfolgend als A', B' und C' bezeichnet. Auch die Vektoren A', B', C' weisen einen Phasenversatz von 120° elektrisch relativ zueinander auf. Sie rotieren gleichsinnig zu den Vektoren A, B und C des Strommitsystems. Die Reihenfolge der Vektoren A', B' und C' des Stromgegensystems ist jedoch relativ zu den Vektoren A, B und C des Strommitsystems vertauscht. Die Reihenfolge ist also C', B', A'.

Auch das Stromnullsystem weist drei Vektoren gleicher Amplitude auf, nachfolgend als A", B" und C" bezeichnet. Der Phasenversatz der Vektoren A", B" und C" relativ zueinander ist null. Die Vektoren A", B" und C" rotieren also gleichphasig. Sie rotieren gleichsinnig zu den Vektoren A, B, C des Strommitsystems.

Die durch die Vektoren A, A' und A" beschriebenen Ströme fließen in einer der Phasen 3 des Stromsystems 2. Die Ströme B, B' und B" fließen in einer anderen der Phasen 3 des Stromsystems 2. Die Ströme C, C' und C" fließen in der dritten der Phasen 3 des Stromsystems 2.

Die Amplituden der Vektoren A, B, C des Strommitsystems, der Vektoren A', B', C' des Stromgegensystems und der Vektoren A", B", C" des Stromnullsystems können unterschiedlich sein. Auch die Phasenwinkel des Vektors A zum Vektor A' und zum Vektor A" können verschieden voneinander sein. Zusammen definieren das Strommitsystem, das Stromgegensystem und das Stromnullsystem die in den Phasen 3 des Stromsystems 2 fließenden Ströme.

Bei der Ausgestaltung von FIG 2 kann der (gemeinsame) Sternpunkt 15 der Zickzackwicklung 14 geerdet sein. Bei der Ausgestaltung von FIG 3 kann einer der beiden Sternpunkte 15, 16 von Netztransformator 4 und Zickzacktransformator 14 geerdet sein. Alternativ ist es bei der Ausgestaltung von FIG 3 möglich, dass keiner der beiden Sternpunkte 15, 16 von Netztransformator 4 und Zickzacktransformator 14 geerdet ist. Beide Sternpunkte 15, 16 sollten aber nicht geerdet sein.

Alternativ zum Vorhandensein einer Zickzackwicklung (siehe die Ausgestaltungen gemäß FIG 2 und FIG 3) ist es gemäß FIG 4 möglich, dass der gemeinsame Sternpunkt 7 des Multilevelkonverters 5 mit dem Sternpunkt 12, 13 eines der Filterkreise 8, 9 verbunden ist. Bei der Ausgestaltung gemäß FIG 4 ist der gemeinsame Sternpunkt 7 des Multilevelkonverters 5 somit einerseits über die Stränge 6 des Multilevelkonverters 5 und andererseits über den entsprechenden Filterkreis 8 mit den Phasen 3 des Stromsystems 2 verbunden.

Auch bei der Ausgestaltung gemäß FIG 4 ist die Verbindung über den entsprechenden Filterkreis 8 derart, dass - bezogen auf diese Verbindung - in Bezug auf das Stromnullsystem des Stromsystems 2 eine niederohmige und in Bezug auf das Strommitsystem des Stromsystems 2 und das Stromgegensystem des Stromsystems 2 eine hochohmige Verbindung des gemeinsamen Sternpunkts 7 des Multilevelkonverters 5 mit den Phasen 3 des Stromsystems 2 besteht. Beispielsweise kann zu diesem Zweck entsprechend der Darstellung von FIG 4 zwischen dem gemeinsamen Sternpunkt 12 des Filterkreises 8 und dem gemeinsamen Sternpunkt 7 des Multilevelkonverters 5 eine Drossel 17 angeordnet sein. Die Drossel 17 kann insbesondere derart dimensioniert sein, dass die kombinierte Impedanz von Drossel 17 und Filterkreis 8 Null ist.

Anstelle der Zickzackwicklung 14 und des Filterkreises 8 kann alternativ auch eine andere Einrichtung verwendet werden, wenn sie die nachfolgenden Eigenschaften aufweist:
- Sie ist an die Phasen 3 des Stromsystems 2 angeschaltet.
- Sie weist einen Sternpunkt auf.
- Der Sternpunkt der genannten Einrichtung ist mit dem gemeinsamen Sternpunkt 7 des Multilevelkonverters 5 verbunden.
- Die Verbindung über die genannte Einrichtung ist derart, dass in Bezug auf das Stromnullsystem des Stromsystems 2 eine niederohmige Verbindung des gemeinsamen Sternpunkts 7 des Multilevelkonverters 5 mit den Phasen 3 des Stromsystems 2 besteht.
- Die Verbindung über die Einrichtung ist weiterhin derart, dass in Bezug auf das Strommitsystem des Stromsystems 2 und das Stromgegensystem des Stromsystems 2 eine hochohmige Verbindung des gemeinsamen Sternpunkts 7 des Multilevelkonverters 5 mit den Phasen 3 des Stromsystems 2 besteht.

Die vorliegende Erfindung weist viele Vorteile auf. Insbesondere ist die Spannungsbelastung des Multilevelkonverters 5 bei der erfindungsgemäßen Ausgestaltung um den Faktor 1,7320 niedriger als bei einer Dreieckanschaltung. Die erfindungsgemäße Stromversorgungseinrichtung kann daher bei gleicher Leistungsfähigkeit erheblich kostengünstiger realisiert werden als eine vergleichbare Stromversorgungseinrichtung des Standes der Technik. Bei Neuanlagen, bei denen die Zickzackwicklung 14 als Sekundärwicklung in den Netztransformator 4 eingebaut werden kann, sind Einsparungen von 20% bis 40% möglich. Bei einer Nachrüstung sind ebenfalls Einsparungen möglich, auch wenn diese etwas niedriger sind.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Stromversorgungseinrichtung für eine nichtlineare, zeitlich variierende Last (1),
- wobei die Stromversorgungseinrichtung ein Stromsystem (2) mit mehreren Phasen (3) aufweist,
- wobei an die Phasen (3) des Stromsystems (2) die nichtlineare, zeitlich variierende Last (1) und ein Blindleistungskompensator (5) angeschaltet sind,
- wobei der Blindleistungskompensator (5) als Multilevelkonverter mit mehreren Strängen (6) ausgebildet ist,
- wobei die Stränge (6) des Multilevelkonverters (5) einerseits mit je einer der Phasen (3) des Stromsystems (2) und andererseits an einem gemeinsamen Sternpunkt (7) miteinander verbunden sind,
**dadurch gekennzeichnet,**
- **dass** der gemeinsame Sternpunkt (7) des Multilevelkonverters (5) mit einem Sternpunkt (12, 15) einer weiteren an die Phasen (3) des Stromsystems (2) angeschalteten Einrichtung (8, 14) verbunden ist, so dass der gemeinsame Sternpunkt (7) des Multilevelkonverters (5) sowohl über die Stränge (6) des Multilevelkonverters (5) als auch über die weitere Einrichtung (8, 14) mit den Phasen (3) des Stromsystems (2) verbunden ist, und
- **dass** die Verbindung über die weitere Einrichtung (8, 14) derart ausgebildet ist, dass in Bezug auf das Stromnullsystem des Stromsystems (2) eine niederohmige und in Bezug auf das Strommitsystem des Stromsystems (2) und das Stromgegensystem des Stromsystems (2) eine hochohmige Verbindung des gemeinsamen Sternpunkts (7) des Multilevelkonverters (5) mit den Phasen (3) des Stromsystems (2) besteht.

2. Stromversorgungseinrichtung nach Anspruch 1,
**dadurch gekennzeichnet,**
**dass** die weitere Einrichtung (8, 14) als Zickzackwicklung (14) ausgebildet ist.

3. Stromversorgungseinrichtung nach Anspruch 2,
**dadurch gekennzeichnet,**
**dass** die Stromversorgungseinrichtung einen Netztransformator (4) aufweist, über den die Phasen (3) des Stromsystems (2) mit elektrischer Energie versorgbar sind, und dass die Zickzackwicklung (14) als Sekundärwicklung in den Netztransformator (4) eingebaut ist.

4. Stromversorgungseinrichtung nach Anspruch 2,
**dadurch gekennzeichnet,**
**dass** die Stromversorgungseinrichtung einen Netztransformator (4) aufweist, über den die Phasen (3) des Stromsystems (2) mit elektrischer Energie versorgbar sind, und dass die Zickzackwicklung (14) als vom Netztransformator (4) verschiedener Zickzacktransformator ist.

5. Stromversorgungseinrichtung nach Anspruch 4,
**dadurch gekennzeichnet,**
**dass** mindestens einer der Sternpunkte (15, 16) des Netztransformators (4) und des Zickzacktransformators (14) nicht geerdet ist.

6. Stromversorgungseinrichtung nach einem der Ansprüche 2 bis 5, **dadurch gekennzeichnet,**
**dass** die Stromversorgungseinrichtung einen Filterkreis (8) aufweist, über den Oberschwingungen von Last- und Konverterströmen filterbar sind, und dass der Filterkreis (8) mehrere Stränge (10) aufweist, die einerseits mit je einer der Phasen (3) des Stromsystems (2) und andererseits an einem gemeinsamen Sternpunkt (12) des Filterkreises (8) miteinander verbunden sind.

7. Stromversorgungseinrichtung nach Anspruch 1,
**dadurch gekennzeichnet,**
**dass** die Stromversorgungseinrichtung einen Filterkreis (8) aufweist, über den Oberschwingungen von Last- und Konverterströmen filterbar sind, dass der Filterkreis (8) mehrere Stränge (10) aufweist, die einerseits mit je einer der Phasen (3) des Stromsystems (2) und andererseits an einem gemeinsamen Sternpunkt (12) des Filterkreises (8) miteinander verbunden sind, und dass die weitere Einrichtung (8, 14) mit dem Filterkreis (8) identisch ist.

8. Stromversorgungseinrichtung nach Anspruch 7,
**dadurch gekennzeichnet,**
**dass** zwischen dem gemeinsamen Sternpunkt (12) des Filterkreises (8) und dem gemeinsamen Sternpunkt (7) des Multilevelkonverters (5) eine Drossel (17) angeordnet ist.

9. Stromversorgungseinrichtung nach Anspruch 8,
**dadurch gekennzeichnet,**
**dass** die Drossel (17) derart dimensioniert ist, dass die kombinierte Impedanz von Drossel (17) und Filterkreis (8) Null ist.

10. Stromversorgungseinrichtung nach Anspruch 7, 8 oder 9,
**dadurch gekennzeichnet,**
**dass** die Stromversorgungseinrichtung mindestens einen weiteren Filterkreis (9) aufweist, über den Oberschwingungen von Last- und Konverterströmen filterbar sind.

11. Stromversorgungseinrichtung nach einem der obigen Ansprüche, **dadurch gekennzeichnet,**
**dass** die Anzahl an Phasen (3) des Stromsystems (2) drei ist.
